# EUROPEAN PATENT APPLICATION

(11) **EP 4 391 170 A1**
(43) Date of publication of application: **26.06.2024**
(21) Application number: 22897698.1
(22) Date of filing: 17.11.2022
(51) Int. Cl.: H01M 50/204, H01M 50/249, H01M 50/284, H01M 50/51, H01M 50/519, H01M 50/569

(54) **CELL UNIT, BATTERY, AND VEHICLE**

(30) Priority: 24.11.2021 CN 202122903216 U
(71) Applicant: BYD Company Limited, Shenzhen, Guangdong 518118 (CN)
(72) Inventor: GUO, Yongming, Shenzhen, Guangdong 518118 (CN); LANG, Xiaoqiang, Shenzhen, Guangdong 518118 (CN); CHEN, Wei, Shenzhen, Guangdong 518118 (CN); ZHOU, Yanfei, Shenzhen, Guangdong 518118 (CN); CHEN, Yaolei, Shenzhen, Guangdong 518118 (CN)
(74) Representative: Dehns Germany Partnerschaft mbB
(86) International application number: PCT/CN2022/132611
(87) International publication number: WO 2023/093615

(57) **Abstract**

Disclosed are a battery core unit, a battery, and a vehicle. The battery core unit includes a battery core string and a sampling structure. The battery core string includes multiple battery core groups and at least one fixing support. The multiple battery core groups are arranged along a first direction and connected in series, and an electrical connection position of any two adjacent battery core groups is provided with the fixing support. The sampling structure is electrically connected with the multiple battery core groups. The sampling structure is provided with notches. Each of the notches is internally provided with a limiting strip. The limiting strip is connected with an inner wall of the notch. The fixing support is provided with first protrusions and second protrusions. The first protrusions and the second protrusions are located in the notches. The first protrusions and the second protrusions are arranged spaced away to form spacing regions. The limiting strips are arranged within the spacing regions through limiting fit.

## Description

### CROSS-REFERENCE TO RELATED APPLICATIONS

The present disclosure is proposed based on and claims priority to Chinese Patent Application No. 202122903216.7 filed on November 24, 2021. The entire content of the above-referenced application is incorporated herein by reference.

### FIELD

The present disclosure relates to the technical field of batteries, and more specifically, to a battery core unit, a battery, and a vehicle.

### BACKGROUND

In related arts, multiple battery cores connected in series are arranged in a battery to increase an output voltage of the battery, and a sampling wire harness is arranged inside the battery to collect signals of voltage and/or temperature and the like of each battery core, so as to acquire an operation state of each battery core. However, the sampling wire harness is not positioned, and consequently, when the battery vibrates for a long term, the sampling wire harness shakes, causing that a joint of the sampling wire harness and the battery core is likely to loose, and as a result, related information of the battery core cannot be collected in time.

### SUMMARY

The present disclosure aims to solve at least one of technical problems existing in the related arts. Accordingly, the present disclosure provides a battery core unit, a battery, and a vehicle, facilitating improvement of connection reliability of a sampling structure and battery cores.

According to one aspect, the present disclosure provides a battery core unit. The battery core unit includes: a battery core string and a sampling structure.

The battery core string includes multiple battery core groups and at least one fixing support. The multiple battery core groups are arranged along a first direction and connected in series, and an electrical connection position of any two adjacent battery core groups is provided with the fixing support.

The sampling structure is electrically connected with the multiple battery core groups. The sampling structure is provided with notches. Each of the notches is internally provided with a limiting strip. The limiting strip is connected with an inner wall of the notch. The fixing support is provided with first protrusions and second protrusions. The first protrusions and the second protrusions are located in the notches. The first protrusions and the second protrusions are arranged spaced away to form spacing regions. The limiting strips are arranged within the spacing regions through limiting fit.

According to the battery core unit provided by this embodiment of the present disclosure, the sampling structure is provided with the notches. Each of the notches is internally provided with the limiting strip. The fixing support is provided with the first protrusions and the second protrusions. The first protrusions and the second protrusions are arranged spaced away to form the spacing regions. The limiting strips are arranged within the spacing regions through limiting fit, such that the sampling structure can be arranged on the fixing support through limiting fit of the limiting strips, so as to reduce shaking of the sampling structure, which is beneficial to improve connection reliability of the sampling structure and battery cores.

In some embodiments, an opening of the notch is located in one side of the sampling structure along the first direction. The first protrusions and the second protrusions are arranged spaced away along the first direction. Two opposite inner walls of the notch along a second direction are connected with the limiting strip.

In some embodiments, the sampling structure is provided with multiple collection terminals. Each of the collection terminals is electrically connected with the corresponding battery core group. The multiple collection terminals are respectively a first collection terminal, second collection terminals, and third collection terminals. The first collection terminal and the second collection terminals are distributed at two opposite ends of the battery core string along the first direction. The third collection terminals are located between the first collection terminal and the second collection terminals, and the third collection terminals are arranged on an outer edge of the sampling structure and located on one side of the notch.

In some embodiments, the battery core unit includes at least two battery core strings. The at least two battery core strings are arranged along the second direction. The battery core string has a first end and a second end opposite to each other along the first direction. The at least two battery core strings include a first battery core string and a second battery core string. The first battery core string and the second battery core string are connected in series through two battery core groups located at the respective first ends.

Each of the first battery core string and the second battery core string includes M battery core groups arranged along the first direction, and M is an integer greater than or equal to 2. 2M+1 collection terminals are arranged, including one first collection terminal, two second collection terminals, and 2M-2 third collection terminals. The first collection terminal is arranged at the first end of the battery core string, and the two second collection terminals are arranged at the second end of the battery core string. The sampling structure has a first side and a second side opposite to each other along the second direction. The two second collection terminals and the 2M-2 third collection terminals are evenly distributed on the first side and the second side of the sampling structure respectively.

Two battery core groups located at the respective first ends of the first battery core string and the second battery core string are both electrically connected with the first collection terminal. Two battery core groups located at the respective second ends of the first battery core string and the second battery core string are electrically connected with the two second collection terminals in a one-to-one correspondence manner. The M-1 third collection terminals located on the same side of the sampling structure are arranged between the respective corresponding two adjacent battery core groups, and are electrically connected with the two adjacent battery core groups.

In some embodiments, two notches are arranged in the second direction, and two first protrusions and two second directions are arranged.

The first protrusions and the second protrusions are arranged in the corresponding notches. Each of the notches is internally provided with the limiting strip. The limiting strip is arranged in the corresponding spacing region through limiting fit.

In some embodiments, the sampling structure is bonded and fixed to the fixing support.

In some embodiments, any two adjacent battery core groups are connected through a conductive connection member. The fixing support is arranged between any two adjacent battery core groups. The fixing support is configured to fix the conductive connection member.

The battery core group includes at least two battery cores connected in parallel. The battery core has a positive tab and a negative tab. The positive tab and the negative tab are distributed at two opposite ends of the battery core along the first direction.

The positive tabs of the battery cores of one battery core group of any two adjacent battery core groups are connected with the negative tabs of the battery cores of the other battery core group through the conductive connection members.

In some embodiments, the fixing support includes two first supports oppositely arranged along the first direction.

The conductive connection member includes two electrically-connected conductive sheets. The two conductive sheets are fixed to the two first supports in a one-to-one correspondence manner.

The positive tabs of the battery cores of one battery core group of any two adjacent battery core groups penetrate through the corresponding first support and are connected with the conductive sheet on the first support. The negative tabs of the battery cores of the other battery core group penetrate through the corresponding first support and are connected with the conductive sheet on the first support.

In some embodiments, the sampling structure is arranged on one side of the battery core string along a third direction. The conductive sheet includes a body portion and a first bending portion.

The body portions of the two conductive sheets are located on two opposite sides of the two first supports. The body portions are configured to be electrically connected with the positive tabs or the negative tabs of the battery cores of the corresponding battery core groups.

The first bending portion is arranged at one end of the body portion close to the sampling structure, and the first bending portion is located on one side of the corresponding first support along the third direction. The first bending portion is configured to be electrically connected with the sampling structure.

In some embodiments, the conductive sheet further includes a second bending portion. The second bending portion is arranged on one side of the body portion along the second direction, and the second bending portion is located on one side of the corresponding first support along the second direction. An avoidance opening is defined by the second bending portion and the body portion jointly, and the avoidance opening is configured to avoid the positive tab or the negative tab of at least one battery core of the corresponding battery core group.

The conductive connection member further includes a first connection sheet. The second bending portions of the two conductive sheets are electrically connected through the first connection sheet.

In some embodiments, the battery core unit includes at least two battery core strings. The at least two battery core strings are arranged along the second direction. The battery core string has a first end and a second end opposite to each other along the first direction. The at least two battery core strings include a first battery core string and a second battery core string. The first battery core string and the second battery core string are connected in series through two battery core groups located at the respective first ends.

Two battery core groups right opposite in the first battery core string and the second battery core string correspond to the same first support. The first support is provided with the two conductive sheets in a spaced manner. Each conductive sheet is electrically connected with the corresponding battery core group.

In some embodiments, the two battery core groups used for connecting the first battery core string and the second battery core string in series are respectively a first battery core group and a second battery core group.

The battery core unit further includes a second support for fixing a second connection sheet. The second support is located at the first end of the first battery core string. The positive tabs of the battery cores of one battery core group from the first battery core group and the second battery core group and the negative tabs of the battery cores of the other battery core group penetrate through the second support and are electrically connected through the second connection sheet.

In some embodiments, the battery core unit further includes a third support. Two third connection sheets are arranged spaced away on the third support. The third support is located at the second end of the first battery core string. Two battery core groups located at the second ends of the first battery core string and the second battery core string are respectively a third battery core group and a fourth battery core group. The positive tabs of the battery cores of one battery core group from the third battery core group and the fourth battery core group penetrate through the third support and are electrically connected through one of the third connection sheets, and the negative tabs of the battery cores of the other battery core group penetrate through the third support and are electrically connected through the other third connection sheet.

According to another aspect, the present disclosure further provides a battery, which includes a housing and a battery core unit according to any one of the above embodiments. The battery core unit is arranged in the housing.

According to another aspect, the present disclosure further provides a vehicle, which includes a battery core unit according to any one of the above embodiments or a battery according to any one of the above embodiments.

According to the battery provided by the present disclosure, the sampling structure can be arranged on the fixing support through limiting fit of the limiting strips, so as to reduce shaking of the sampling structure, which is beneficial to improve connection reliability of the sampling structure and the battery cores.

Additional aspects and advantages of the present disclosure will be given in the following description, some of which will become apparent from the following description or may be learned from practices of the present disclosure.

### BRIEF DESCRIPTION OF THE DRAWINGS

The foregoing and/or additional aspects and advantages of the present disclosure will become apparent and comprehensible in the description of the embodiments made with reference to the following accompanying drawings.
FIG. 1 is a schematic diagram of a battery according to an embodiment of the present disclosure;
FIG. 2 is a schematic diagram of the battery in FIG. 1 without a housing;
FIG. 3 is a partial enlarged view of a position A in FIG. 2;
FIG. 4 is an exploded view of FIG. 2;
FIG. 5 is a partial enlarged view of a position B in FIG. 4;
FIG. 6 is a partial enlarged view of a position C in FIG. 4;
FIG. 7 is a schematic structural diagram of connection of two adjacent battery core groups in a same battery core string with first supports and conductive sheets;
FIG. 8 is an exploded view of FIG. 7;
FIG. 9 is an exploded view of a structure indicated by a square at a position D in FIG. 8;
FIG. 10 is an exploded view of a structure indicated by a square at a position E in FIG. 8;
FIG. 11 is a schematic diagram of a partial structure of a battery core unit, illustrating connection of a first battery core group, a second battery core group, a second connection sheet, and a second support; and

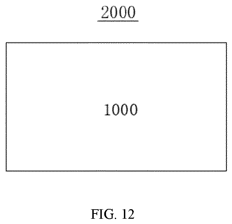

FIG. 12 is a schematic diagram of a vehicle according to an embodiment of the present disclosure.

### Descriptions of reference numerals:

2000-vehicle;
1000-battery;
100-battery core unit; 101-battery core string; 102-sampling structure; 103-battery core group; 1031battery core; 1032-positive tab; 1033-negative tab; 104-fixing support; 106-notch; 107-limiting strip; 108-first protrusion; 109-second protrusion; 110-spacing region; 111-collection terminal; 112-first collection terminal; 113-second collection terminal; 114-third collection terminal; 115-first battery core string; 116-second battery core string; 117-conductive connection member; 118-first support; 119-conductive sheet; 1191-body portion; 1192-first bending portion; 1193-second bending portion; 120-first connection sheet; 121-first battery core group; 122-second battery core group; 123-second connection sheet; 1231-base body portion; 1232-extension portion; 124-second support; 25-third support; 126-third connection sheet; 127-first end; 128-second end; 129-first side; 130-second side; 131-avoidance opening; 132-third battery core group; 133-fourth battery core group; 134-through hole; and
200-housing.

### DETAILED DESCRIPTION

Embodiments of the present disclosure are described in detail below, and examples of the embodiments are shown in the accompanying drawings, where the same or similar elements or the elements having the same or similar functions are denoted by the same or similar reference numerals throughout the description. The embodiments described below with reference to the accompanying drawings are exemplary, are used only for explaining the present disclosure, and should not be construed as a limitation on the present disclosure.

**In** the description of the present disclosure, it should be understood that orientation or position relationships indicated by the terms such as "center", "longitudinal", "transverse", "length", "width", "thickness", "up", "down", "front", "back", "left", "right", "vertical", "horizontal", "top", "bottom", "inside", "outside", "axial direction", "radial direction", and "circumferential direction" are based on orientation or position relationships shown in the accompanying drawings, and are intended to facilitate the description of the present disclosure and simplify the description only, rather than indicating or implying that the mentioned apparatus or element must have a particular orientation or must be constructed and operated in a particular orientation. Therefore, such terms should not be construed as limiting of the present disclosure.

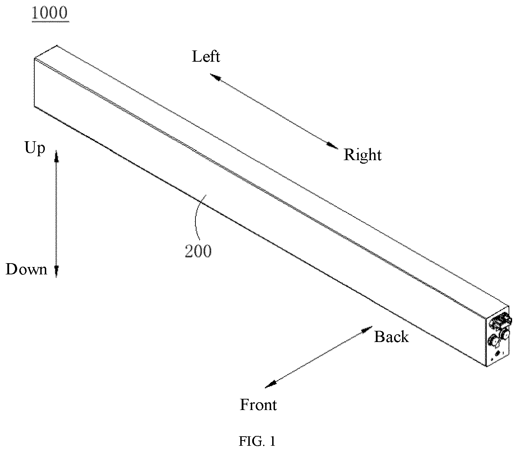

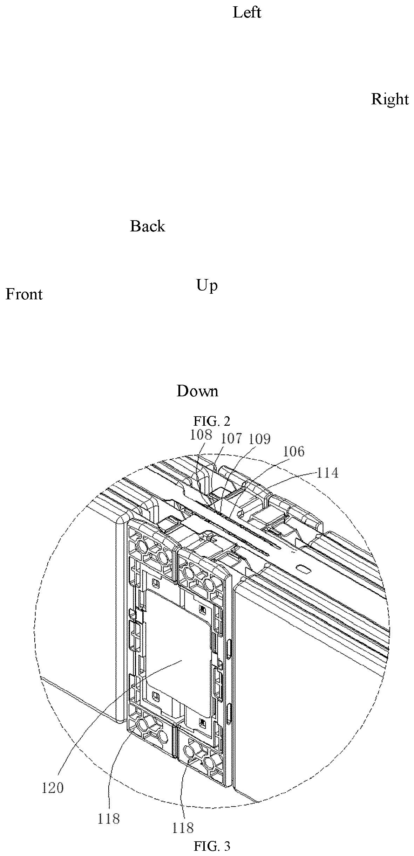

As shown in FIG. 1 to FIG. 6, the present disclosure provides a battery core unit 100, which includes a battery core string 101 and a sampling structure 102. The battery core string 101 includes multiple battery core groups 103 and at least one fixing support 104. The multiple battery core groups 103 are arranged along a first direction and connected in series, and an electrical connection position of any two adjacent battery core groups 103 is provided with the fixing support 104. The sampling structure 102 is electrically connected with the multiple battery core groups 103. The sampling structure 102 is provided with notches 106. Each of the notches 106 is internally provided with a limiting strip 107. The limiting strip 107 is connected with an inner wall of the notch 106. The fixing support 104 is provided with first protrusions 108 and second protrusions 109. The first protrusions 108 and the second protrusions 109 are located in the notches 106. The first protrusions 108 and the second protrusions 109 are arranged spaced away to form spacing regions 110. The limiting strips 107 are arranged within the spacing regions 110 through limiting fit. The first direction may be a left-right direction in FIG. 2, and the first direction may be consistent to a length direction of the battery core string 101 or a battery 1000. In addition, the battery core group 103 includes at least one battery core 1031. When the battery core group 103 includes multiple battery cores 1031, the battery cores 1031 are connected in parallel. The battery core 1031 may be a bare battery core, or a pouch battery core.

It should be noted that the limiting fit may be understand in a way that two opposite sides of the limiting strip 107 directly or indirectly abut against the first protrusion 108 and the second protrusion 109, such that the limiting strip 107 is arranged within the spacing region 110 through limiting fit. According to the battery core unit 100 provided by the present disclosure, the sampling structure 102 is provided with the notches 106. Each of the notches 106 is internally provided with the limiting strip 107. The fixing support 104 is provided with the first protrusions 108 and the second protrusions 109. The first protrusions 108 and the second protrusions 109 are arranged spaced away to form the spacing regions 110. The limiting strips 107 are arranged within the spacing regions 110 through limiting fit, such that the sampling structure 102 can be arranged on the fixing support 104 through limiting fit of the limiting strips 107, so as to reduce shaking of the sampling structure 102, which is beneficial to improve connection reliability of the sampling structure 102 and the battery cores 1031.

In some embodiments, the fixing support 104 together with the first protrusions 108 and the second protrusions 109 is a member subjected to integrated forming, such as integrated injection molding.

In some embodiments, the sampling structure 102 may be a flexible printed circuit board or a flexible flat cable.

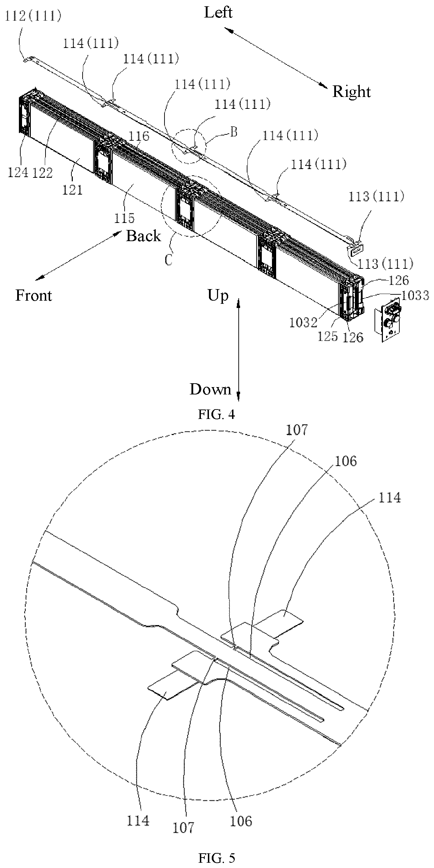

In some embodiments, as shown in FIG. 4 to FIG. 6, an opening of the notch 106 is located in one side of the sampling structure 102 along the first direction. The first protrusions 108 and the second protrusions 109 are distributed spaced away along the first direction. Two opposite inner walls of the notch 106 along a second direction are connected with the limiting strip 107. Therefore, by arranging the limiting strip 107, the problem about deformation of an opening side of the notch 106 can be ameliorated, so as to keep the shape of the notch 106 as much as possible. The second direction may be a front-back direction in FIG. 4, and the second direction may be consistent to a thickness direction of the battery core string 101 or the battery 1000.

In some embodiments, as shown in FIG. 2 to FIG. 6, the sampling structure 102 is provided with multiple collection terminals 111, and each of the collection terminals 111 is electrically connected with the corresponding battery core group 103. The multiple collection terminals 111 are respectively a first collection terminal 112, second collection terminals 113, and third collection terminals 114. The first collection terminal 112 and the second collection terminals 113 are distributed at two opposite ends of the battery core string 101 along the first direction, and the third collection terminals 114 are located between the first collection terminal 112 and the second collection terminals 113. The third collection terminals 114 are arranged on an outer edge of the sampling structure 102 and located on one side of the notch 106. This arrangement can facilitate connection of the third collection terminals 114 and the battery core group 103. In addition, by arranging the limiting strip 107, the problem that the opening of the notch 106 is enlarged by pulling during the connection of the third collection terminals 114 and the battery core group 103 can be ameliorated, so as to improve connection reliability of the third collection terminals 114 and the battery core group 103.

In some embodiments, as shown in FIG. 2 and FIG. 4, the battery core unit 100 includes at least two battery core strings 101. The at least two battery core strings 101 are arranged along the second direction, and each of the battery core strings 101 has a first end 127 and a second end 128 opposite to each other along the first direction. The at least two battery core strings 101 include a first battery core string 115 and a second battery core string 116. The first battery core string 115 and the second battery core string 116 are connected in series through two battery core groups 103 located at the respective first ends 127. Each of the first battery core string 115 and the second battery core string 116 includes M battery core groups 103 arranged along the first direction, and M is an integer greater than or equal to 2. 2M+1 collection terminals 111 are arranged, including one first collection terminal 112, two second collection terminals 113, and 2M-2 third collection terminals 114. The first collection terminal 112 is arranged at the first end 127 of the battery core string 101, and the two second collection terminals 113 are arranged at the second end 128 of the battery core string 101. The sampling structure 102 has a first side 129 and a second side 130 opposite to each other along the second direction. The two second collection terminals 113 and the 2M-2 third collection terminals 114 are evenly distributed on the first side 129 and the second side 130 of the sampling structure 102 respectively. Two battery core groups 103 located at the respective first ends 127 of the first battery core string 115 and the second battery core string 116 are both electrically connected with the first collection terminal 112. Two battery core groups 103 located at the respective second ends 128 of the first battery core string 115 and the second battery core string 116 are electrically connected with the two second collection terminals 113 in a one-to-one correspondence manner. The M-1 third collection terminals 114 located on the same side of the sampling structure 102 are arranged between the respective corresponding two adjacent battery core groups 103, and are electrically connected with the two adjacent battery core groups 103.

As shown in FIG. 2 and FIG. 4, the first battery core string 115 and the second battery core string 116 are arranged along a direction from front to back. Each of the first battery core string 115 and the second battery core string 116 includes four battery core groups 103 arranged along a direction from left to right. Nine collection terminals 111 are arranged, including one first collection terminal 112, two second collection terminals 113, and six third collection terminals 114. The two second collection terminals 113 and the six third collection terminals 114 are evenly distributed on the first side 129 and the second side 130 of the sampling structure 102 respectively. Two battery core groups 103 located at the leftmost ends of the first battery core string 115 and the second battery core string 116 are electrically connected with the first collection terminal 112. Two battery core groups 103 located at the rightmost ends of the first battery core string 115 and the second battery core string 116 are electrically connected with the two second collection terminals 113 in a one-to-one correspondence manner. The three third collection terminals 114 located on the first side 129 of the sampling structure 102 are arranged between the respective corresponding two adjacent battery core groups 103, and are electrically connected with the two adjacent battery core groups 103. That is, along the direction from left to right, the first third collection terminal 114 is located between the first battery core group 103 and the second battery core group 103, and is electrically connected with the two battery core groups 103; the second third collection terminal 114 is located between the second battery core group 103 and the third battery core group 103, and is electrically connected with the two battery core groups 103; and the third third collection terminal 114 is located between the third battery core group 103 and the fourth battery core group 103, and is electrically connected with the two battery core groups 103. A connection manner of the three third collection terminals 114 located on the second side 130 of the sampling structure 102 and the battery core groups 103 is similar to the connection manner of the three third collection terminals 114 located on the first side 129 of the sampling structure 102 and the battery core groups 103, which is not repeated herein. In addition, the number of the battery core groups 103 included in the first battery core string 115 and the second battery core string 116 can be set according to actual needs, for example, two or three.

It should be noted that the number of the collection terminals 111 can be set according to actual needs, which is not enumerated herein. For example, in other embodiments, it may also be that: 2M+2 collection terminals 111 are arranged, including two first collection terminals 112, two second collection terminals 113, and 2M-2 third collection terminals 114, where the two battery core groups 103 located at the respective first ends 127 of the first battery core string 115 and the second battery core string 116 are electrically connected with the two first collection terminals 112 in a one-to-one correspondence manner.

In some other embodiments, the battery core unit 100 may also include one battery core string 101. The battery core string 101 has the first end 127 and the second end 128 opposite to each other along the first direction. The first collection terminal 112 is located at the first end 127 of the battery core string 101, and the second collection terminal 113 is located at the second end 128 of the battery core string 101. The battery core string 101 includes N battery core groups 103 arranged along the first direction, where N is an integer greater than or equal to 2. N+1 collection terminals 111 are arranged, including one first collection terminal 112, one second collection terminal 113, and N-1 third collection terminals 114. The first collection terminal 112 is electrically connected with the battery core group 103 located at the first end 127 of the battery core string 101. The second collection terminal 113 is electrically connected with the battery core group 103 located at the second end 128 of the battery core string 101. The N-1 third collection terminals 114 are arranged between the respective corresponding two adjacent battery core groups 103, and are electrically connected with the two adjacent battery core groups 103. For example, the battery core string 101 includes four battery core groups 103 arranged along the direction from left to right, and five collection terminals 111 are arranged, including one first collection terminal 112, one second collection terminal 113, and three third collection terminals 114. The first collection terminal 112 is electrically connected with the battery core group 103 located at the leftmost end, and the second collection terminal 113 is electrically connected with the battery core group 103 located at the rightmost end. Along the direction from left to right, the three third collection terminals 114 are arranged between the respective corresponding two adjacent battery core groups 103, and are electrically connected with the two adjacent battery core groups 103. It should be noted that the number of the collection terminals 111 can be set according to actual needs. For example, in other embodiments, it may also be that: N+2 collection terminals 111 are arranged, including one first collection terminal 112, one second collection terminal 113, and N third collection terminals 114. Two third collection terminals 114 are electrically connected with two adjacent battery core groups 103 in a one-to-one correspondence manner.

In some embodiments, as shown in FIG. 4 to FIG. 6, two notches 106 are arranged in the second direction, and two first protrusions 108 and two second directions 109 are arranged. The first protrusions 108 and the second protrusions 109 are arranged in the corresponding notches 106. Each of the notches 106 is internally provided with the limiting strip 107. The limiting strip 107 is arranged in the corresponding spacing region 110 through limiting fit. Through such arrangement, it is beneficial to reduce displacement of the sampling structure 102, and improve connection reliability of the sampling structure 102 and the battery core groups 103.

In some embodiments, the sampling structure 102 is bonded and fixed to the fixing support 104. Accordingly, the sampling structure 102 and the fixing support 104 can be fixedly connected, and therefore it is beneficial to reduce displacement of the sampling structure 102, and improve connection reliability of the sampling structure 102 and the battery core string 101. Specifically, one side of the sampling structure 102 in a thickness direction is provided with a structural adhesive, and the sampling structure 102 is bonded and fixed to the fixing support 104 through the structural adhesive.

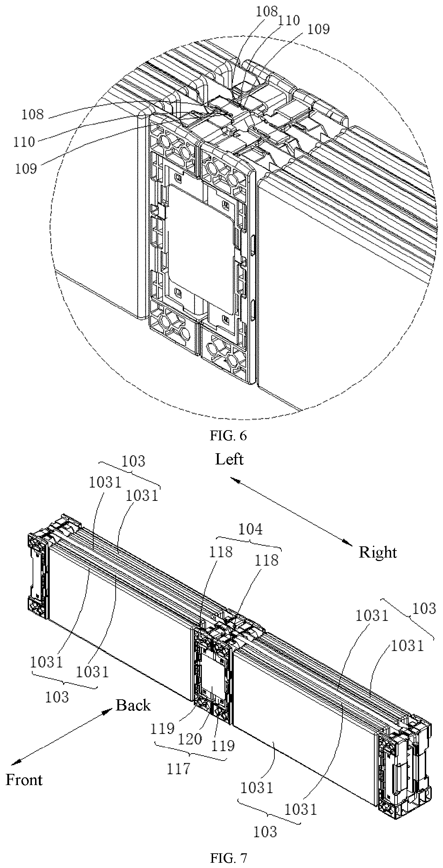

In some embodiments, as shown in FIG. 2 and FIG. 7 to FIG. 10, any two adjacent battery core groups 103 are connected through a conductive connection member 117. The fixing support 104 is arranged between any two adjacent battery core groups 103. The fixing support 104 is configured to fix the conductive connection member 117. The battery core group 103 includes at least two battery cores 1031 connected in parallel. The battery core 1031 has a positive tab 1032 and a negative tab 1033. The positive tab 1032 and the negative tab 1033 are distributed at two opposite ends of the battery core 1031 along the first direction. The positive tabs 1032 of the battery cores 1031 of one battery core group 103 of any two adjacent battery core groups 103 are connected with the negative tabs 1033 of the battery cores 1031 of the other battery core group 103 through the conductive connection members 117. As shown in FIG. 7 to FIG. 9, along the direction from left to right, each of the first battery core group 103 and the second battery core group 103 includes two battery cores 103 connected in parallel. The positive tabs 1032 of the two battery cores 1031 included in the first battery core group 103 are connected with the negative tabs 1033 of the two battery cores 1031 included in the second battery core group 103 through the conductive connection members 117. Certainly, it may also be that the negative tabs 1033 of the two battery cores 1031 included in the first battery core group 103 are connected with the positive tabs 1032 of the two battery cores 1031 included in the second battery core group 103 through the conductive connection members 117. In addition, the battery core group 103 may further include three or more battery cores 1031 connected in parallel.

In some embodiments, as shown in FIG. 7 to FIG. 10, the fixing support 104 includes two first supports 118 oppositely arranged along the first direction. The conductive connection member 117 includes two electrically-connected conductive sheets 119. The two conductive sheets 119 are fixed to the two first supports 118 in a one-to-one correspondence manner. The positive tabs 1032 of the battery cores 1031 of one battery core groups 103 of any two adjacent battery core groups 103 penetrate through the corresponding first support 118 and are connected with the conductive sheet 119 on the first support 118. The negative tabs 1033 of the battery cores 1031 of the other battery core group 103 penetrate through the corresponding first support 118 and are connected with the conductive sheet 119 on the first support 118. As shown in FIG. 7 to FIG. 9, along the direction from left to right the first conductive sheet 119 is fixed to the first first support 118, and the second conductive sheet 119 is fixed to the second first support 118. The positive tabs 1032 of the battery cores 1031 included in the first battery core group 103 penetrate through the first first support 118 and are connected with the conductive sheet 119 on the first support 118. The negative tabs 1032 of the battery cores 1031 included in the second battery core group 103 penetrate through the second first support 118 and are connected with the conductive sheet 119 on the first support 118. Certainly, it may also be that the negative tabs 1033 of the battery cores 1031 included in the first battery core group 103 penetrate through the first first support 118 and are connected with the conductive sheet 119 on the first support 118. The positive tabs 1033 of the battery cores 1031 included in the second battery core group 103 penetrate through the second first support 118 and are connected with the conductive sheet 119 on the first support 118.

In some embodiments, as shown in FIG. 4 to FIG. 8, the sampling structure 102 is arranged on one side of the battery core string 101 along a third direction. The conductive sheet 119 includes a body portion 1191 and a first bending portion 1192. The body portions 1191 of the two conductive sheets 119 are located on two opposite sides of the two first supports 118. The body portions 1191 are configured to be electrically connected with the positive tabs 1032 or the negative tabs 1033 of the battery cores 1031 of the corresponding battery core groups 103. The first bending portion 1192 is arranged at one end of the body portion 1191 close to the sampling structure 102, and the first bending portion 1192 is located on one side of the corresponding first support 118 along the third direction. The first bending portion 1192 is configured to be electrically connected with the sampling structure 102. Specifically, the first bending portion 1192 may be configured to be connected with the third collection terminal 114. By arranging the first bending portion 1192 on one side of the first support 118 along the third direction, connection of the first bending portion 1192 and the sampling structure 102 is facilitated. The third direction may be an up-down direction in FIG. 4, and the third direction may be consistent to a width direction of the battery core string 101 or the battery 1000. Certainly, in other embodiments, the first direction may also be consistent to the width direction of the battery core string 101 or the battery 1000, and the third direction may also be consistent to the length direction of the battery core string 101 or the battery 1000.

Further, the conductive sheet 119 further includes a second bending portion 1193. The second bending portion 1193 is arranged on one side of the body portion 1191 along the second direction, and the second bending portion 1193 is located on one side of the corresponding first support 118 along the second direction. An avoidance opening 131 is defined by the second bending portion 1193 and the body portion 1191 jointly, and the avoidance opening 131 is configured to avoid the positive tab 1032 or the negative tab 1033 of at least one battery core 1031 of the corresponding battery core group 103. For example, the battery core group 103 includes two battery cores 1031 connected in parallel. The positive tabs 1032 or the negative tabs 1033 of the two battery cores 1031 connected in parallel both extend out of the avoidance opening 131. Alternatively, the positive tab 1032 of one battery core 1031 extends out of the avoidance opening 131, and the positive tab 1032 of the other battery core 1031 directly extends out of the first support 118. Alternatively, the negative tab 1033 of one battery core 1031 extends out of the avoidance opening 131, and the negative tab 1033 of the other battery core 1031 directly extends out of the first support 118.

Further, the conductive connection member 117 further includes a first connection sheet 120. The second bending portions 1193 of the two conductive sheets 119 are electrically connected through the first connection sheet 120. By arranging the second bending portion 1193 on one side of the first support 118 along the second direction, connection of the first connection sheet 120 and the second bending portion 1193 is facilitated.

In some embodiments, the conductive sheet 119 is fixed to the first support 118 through snap fit. Specifically, one side of the first support 118 along the second direction is provided with a snap-fit fastener, and the conductive sheet 119 is provided with a snap hole. The snap-fit fastener is snapped into the snap hole to fix the conductive sheet 119 to the first support 118. Certainly, in other embodiments, the conductive sheet 119 may also be fixed to the corresponding first support 118 in a threaded connection manner.

In some embodiments, as shown in FIG. 2 to FIG. 4, the battery core unit 100 includes at least two battery core strings 101. The at least two battery core strings 101 are arranged along the second direction. Each battery core string 101 has the first end 127 and the second end 128 opposite to each other along the first direction. The at least two battery core strings 101 include the first battery core string 115 and the second battery core string 116. The first battery core string 115 and the second battery core string 116 are connected in series through the two battery core groups 103 located at the respective first ends 127. Certainly, three or more battery core strings 101 may be arranged, that is, the number of the battery core strings 101 can be set according to actual needs.

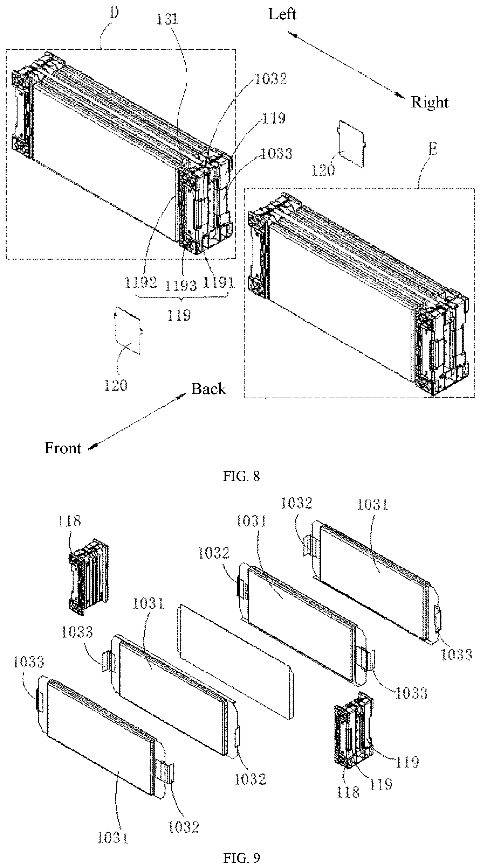

Further, as shown in FIG. 2, FIG. 7, and FIG. 8, two battery core groups 103 right opposite in the first battery core string 115 and the second battery core string 116 correspond to the same first support 118. The first support 118 is provided with two conductive sheets 119 in a spaced manner. Each conductive sheet 119 is electrically connected with the corresponding battery core group 103. As shown in FIG. 8 to FIG. 9, along the direction from left to right, the two battery core groups 103 located at the left end correspond to the same first support 118. The two battery core groups 103 are arranged along the direction from front to back. The conductive sheets 119 on the first support 118 are electrically connected with the corresponding battery core groups 103. Two battery core groups 103 located at the right end correspond to the same first support 118. The two battery core groups 103 are arranged along the direction from front to back. The conductive sheets 119 on the first support 118 are electrically connected with the corresponding battery core groups 103.

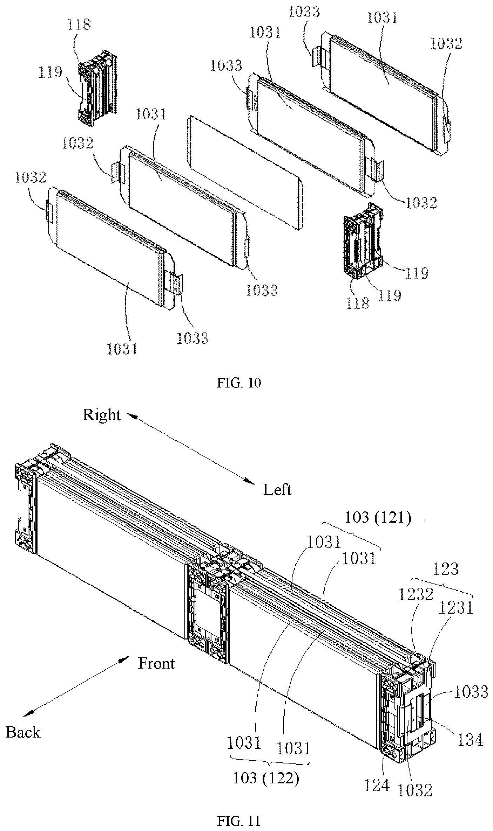

In some embodiments, as shown in FIG. 2 and FIG. 11, the two battery core groups 103 used for connecting the first battery core string 115 and the second battery core string 116 in series are respectively a first battery core group 121 and a second battery core group 122. The battery core unit 100 further includes a second support 124 for fixing a second connection sheet 123. The second support 124 is located at the first end 127 of the first battery core string 115. The positive tabs 1032 of the battery cores 1031 of one battery core group 103 of the first battery core group 121 and the second battery core group 122 and the negative tabs 1033 of the battery cores 1031 of the other battery core group 103 penetrate through the second support 124 and are electrically connected through the second connection sheet 123. As shown in FIG. 11, the negative tabs 1033 of the battery cores 1031 of the first battery core group 121 and the positive tabs 1032 of the battery cores 1031 of the second battery core group 122 penetrate through the second support 124 and are electrically connected through the second connection sheet 123. Certainly, it may also be that the positive tabs 1032 of the battery cores 1031 of the first battery core group 121 and the negative tabs 1033 of the battery cores 1031 of the second battery core group 122 penetrate through the second support 124 and are electrically connected through the second connection sheet 123.

In some embodiments, as shown in FIG. 2, FIG. 3, and FIG. 11, the sampling structure 102 is arranged on one side of the battery core string 101 along the third direction. The second connection sheet 123 includes a base body portion 1231 and an extension portion 1232. The base body portion 1231 is arranged on one side of the second support 124 deviating from the first battery core string 115. The base body portion 1231 is provided with a through hole 134. The negative tab 1033 of at least one battery core 1031 of the first battery core group 121 and the positive tab 1032 of at least one battery core 1031 of the second battery core 1031 penetrate through the through hole 134 and are correspondingly in electrical connection with two opposite sides of the base body portion 1231. Certainly, it may also be that the positive tab 1032 of at least one battery core 1031 of the first battery core group 121 and the negative tab 1033 of at least one battery core 1031 of the second battery core 1031 penetrate through the through hole 134 and are correspondingly in electrical connection with the two opposite sides of the base body portion 1231.

The extension portion 1232 is arranged at one end of the base body portion 1231 close to the sampling structure 102, and the extension portion 1232 is located on one side of the second support 124 along the third direction. The extension portion 1232 is configured to be electrically connected with the sampling structure 102. Specifically, the extension portion 1232 may be connected with the first collection terminal 112. By arranging the extension portion 1232 on one side of the second support 124 along the third direction, connection of the extension portion 1232 and the sampling structure 102 is facilitated.

In some embodiments, the second connection sheet 123 is fixed to the second support 124 through snap fit. Specifically, one side of the second support 124 deviating from the first battery core string 115 is provided with a snap-fit fastener, and the snap-fit fastener is configured to be in snap-fit with the base body portion 1231. Certainly, in other embodiments, the second connection sheet 123 may also be fixed to the corresponding second support 124 in a threaded connection manner.

In some embodiments, as shown in FIG. 2 and FIG. 4, the battery core unit 100 further includes a third support 125. The third support 125 is located at the second end 128 of the first battery core string 115. Two third connection sheets 126 are arranged spaced away on the third support 125. Two battery core groups 103 located at the second ends 128 of the first battery core string 115 and the second battery core string 116 are respectively a third battery core group 132 and a fourth battery core group 133. The positive tabs 1032 of the battery cores 1031 of one battery core group 103 from the third battery core group 132 and the fourth battery core group 133 penetrate through the third support 125 and are electrically connected through one of the third connection sheets 126, and the negative tabs 1033 of the battery cores 1031 of the other battery core group 103 penetrate through the third support 125 and are electrically connected through the other third connection sheet 126.

The structure of the third connection sheet 126 may be the same with the structure of the conductive sheet 119, which is not repeated herein.

According to another aspect, the present disclosure further provides a battery 1000, which includes a housing 200 and a battery core unit 100 according to any one of the above embodiments. The battery core unit 100 is arranged in the housing 200. According to the battery 1000 provided by the present disclosure, the sampling structure 102 can be arranged on the fixing support 104 through limiting fit of the limiting strips 107, so as to reduce shaking of the sampling structure 102, which is beneficial to improve connection reliability of the sampling structure 102 and the battery cores 1031.

According to another aspect, the present disclosure further provides a vehicle 2000, which includes an above battery 1000.

In the description of the present disclosure, it should be understood that orientation or position relationships indicated by the terms such as "center", "longitudinal", "transverse", "length", "width", "thickness", "up", "down", "front", "back", "left", "right", "vertical", "horizontal", "top", "bottom", "inside", and "outside" are based on orientation or position relationships shown in the accompanying drawings, and are intended to facilitate the description of the present disclosure and simplify the description only, rather than indicating or implying that the mentioned apparatus or element must have a particular orientation or must be constructed and operated in a particular orientation. Therefore, such terms should not be construed as limiting of the present disclosure. In addition, a feature defined to be "first" and "second" may explicitly or implicitly include one or more features. In the description of the present disclosure, unless otherwise stated, "multiple" means two or more than two.

In the description of the present disclosure, it should be noted that, unless otherwise explicitly specified or defined, the terms such as "mount", "connect", and "connection" should be understood in a broad sense. For example, the connection may be a fixed connection, a detachable connection, or an integral connection; or the connection may be a mechanical connection or an electrical connection; or the connection may be a direct connection, an indirect connection through an intermediary, or internal communication between two components. A person of ordinary skill in the art may understand the specific meanings of the foregoing terms in the present disclosure according to specific situations.

In the descriptions of this specification, descriptions referring to terms "an embodiment", "some embodiments", "an exemplary embodiment", "an example", "a specific example", or "some examples" mean that specific features, structures, materials, or characteristics described with reference to the embodiment or example are included in at least one embodiment or example of the present disclosure. In this specification, exemplary descriptions of the foregoing terms do not necessarily refer to the same embodiment or example. In addition, the described specific features, structures, materials, or characteristics may be combined in a proper manner in any one or more of the embodiments or examples.

Although the embodiments of the present disclosure have been shown and described, a person of ordinary skill in the art should understand that various changes, modifications, replacements and variations may be made to these embodiments without departing from the principles and spirit of the present disclosure, and the scope of the present disclosure is as defined by the appended claims and their equivalents.

## Claims

1. A battery core unit, comprising: a battery core string and a sampling structure;
the battery core string comprising a plurality of battery core groups and at least one fixing support, the plurality of battery core groups being arranged along a first direction and connected in series, and an electrical connection position of any two adjacent battery core groups being provided with the fixing support;
the sampling structure being electrically connected with the plurality of battery core groups, the sampling structure being provided with notches, each of the notches being internally provided with a limiting strip, and the limiting strip being connected with an inner wall of the notch;
and the fixing support being provided with first protrusions and second protrusions, the first protrusions and the second protrusions being located in the notches, the first protrusions and the second protrusions being arranged spaced away to form spacing regions, and the limiting strips being arranged within the spacing regions through limiting fit.

2. The battery core unit according to claim 1, wherein an opening of the notch is located in one side of the sampling structure along the first direction, the first protrusions and the second protrusions are arranged spaced away along the first direction, and two opposite inner walls of the notch along a second direction are connected with the limiting strip.

3. The battery core unit according to claim 1 or 2, wherein the sampling structure is provided with a plurality of collection terminals, each of the collection terminals is electrically connected with the corresponding battery core group, the plurality of collection terminals are respectively a first collection terminal, second collection terminals, and third collection terminals, the first collection terminal and the second collection terminals are distributed at two opposite ends of the battery core string along the first direction, and the third collection terminals are located between the first collection terminal and the second collection terminals, and the third collection terminals are arranged on an outer edge of the sampling structure and located on one side of the notch.

4. The battery core unit according to claim 3, wherein the battery core unit comprises at least two battery core strings, the at least two battery core strings are arranged along the second direction, the battery core string has a first end and a second end opposite to each other along the first direction, the at least two battery core strings comprise a first battery core string and a second battery core string, and the first battery core string and the second battery core string are connected in series through two battery core groups located at the respective first ends;
each of the first battery core string and the second battery core string comprises M battery core groups arranged along the first direction, and M is an integer greater than or equal to 2; 2M+1 collection terminals are arranged, comprising one first collection terminal, two second collection terminals, and 2M-2 third collection terminals, the first collection terminal is arranged at the first end of the battery core string, the two second collection terminals are arranged at the second end of the battery core string, the sampling structure has a first side and a second side opposite to each other along the second direction, and the two second collection terminals and the 2M-2 third collection terminals are evenly distributed on the first side and the second side of the sampling structure respectively; and
two battery core groups located at the respective first ends of the first battery core string and the second battery core string are both electrically connected with the first collection terminal, two battery core groups located at the respective second ends of the first battery core string and the second battery core string are electrically connected with the two second collection terminals in a one-to-one correspondence manner, and the M-1 third collection terminals located on the same side of the sampling structure are arranged between the respective corresponding two adjacent battery core groups, and are electrically connected with the two adjacent battery core groups.

5. The battery core unit according to claim 4, wherein two notches are arranged in the second direction, and two first protrusions and two second directions are arranged; and
the first protrusions and the second protrusions are arranged in the corresponding notches, and each of the notches is internally provided with the limiting strip, and the limiting strip is arranged in the corresponding spacing region through limiting fit.

6. The battery core unit according to any one of claims 1 to 5, wherein the sampling structure is bonded and fixed to the fixing support.

7. The battery core unit according to any one of claims 1 to 6, wherein any two adjacent battery core groups are connected through a conductive connection member, the fixing support is arranged between any two adjacent battery core groups, and the fixing support is configured to fix the conductive connection member;
the battery core group comprises at least two battery cores connected in parallel, the battery core has a positive tab and a negative tab, and the positive tab and the negative tab are distributed at two opposite ends of the battery core along the first direction; and
the positive tabs of the battery cores of one battery core group of any two adjacent battery core groups are connected with the negative tabs of the battery cores of the other battery core group through the conductive connection members.

8. The battery core unit according to claim 7, wherein the fixing support comprises two first supports oppositely arranged along the first direction;
the conductive connection member comprises two electrically-connected conductive sheets, and the two conductive sheets are fixed to the two first supports in a one-to-one correspondence manner; and
the positive tabs of the battery cores of one battery core group of any two adjacent battery core groups penetrate through the corresponding first support and are connected with the conductive sheet on the first support, and the negative tabs of the battery cores of the other battery core group penetrate through the corresponding first support and are connected with the conductive sheet on the first support.

9. The battery core unit according to claim 8, wherein the sampling structure is arranged on one side of the battery core string along a third direction, and the conductive sheet comprises a body portion and a first bending portion;
the body portions of the two conductive sheets are located on two opposite sides of the two first supports, and the body portions are configured to be electrically connected with the positive tabs or the negative tabs of the battery cores of the corresponding battery core groups; and
the first bending portion is arranged at one end of the body portion close to the sampling structure, and the first bending portion is located on one side of the corresponding first support along the third direction, and the first bending portion is configured to be electrically connected with the sampling structure.

10. The battery core unit according to claim 9, wherein the conductive sheet further comprises a second bending portion, the second bending portion is arranged on one side of the body portion along the second direction, and the second bending portion is located on one side of the corresponding first support along the second direction, an avoidance opening is defined by the second bending portion and the body portion jointly, and the avoidance opening is configured to avoid the positive tab or the negative tab of at least one battery core of the corresponding battery core group; and
the conductive connection member further comprises a first connection sheet, and the second bending portions of the two conductive sheets are electrically connected through the first connection sheet.

11. The battery core unit according to any one of claims 8 to 10, wherein the battery core unit comprises at least two battery core strings, the at least two battery core strings are arranged along the second direction, the battery core string has a first end and a second end opposite to each other along the first direction, the at least two battery core strings comprise a first battery core string and a second battery core string, and the first battery core string and the second battery core string are connected in series through two battery core groups located at the respective first ends; and
two battery core groups right opposite in the first battery core string and the second battery core string correspond to the same first support, the first support is provided with the two conductive sheets in a spaced manner, and each conductive sheet is electrically connected with the corresponding battery core group.

12. The battery core unit according to claim 11, wherein two battery core groups used for connecting the first battery core string and the second battery core string in series are respectively a first battery core group and a second battery core group; and
the battery core unit further comprises a second support for fixing a second connection sheet, the second support is located at the first end of the first battery core string, and the positive tabs of the battery cores of one battery core group from the first battery core group and the second battery core group and the negative tabs of the battery cores of the other battery core group penetrate through the second support and are electrically connected through the second connection sheet.

13. The battery core unit according to any one of claims 11 to 12, wherein the battery core unit further comprises a third support, two third connection sheets are arranged spaced away on the third support, the third support is located at the second end of the first battery core string, two battery core groups located at the second ends of the first battery core string and the second battery core string are respectively a third battery core group and a fourth battery core group, the positive tabs of the battery cores of one battery core group from the third battery core group and the fourth battery core group penetrate through the third support and are electrically connected through one of the third connection sheets, and the negative tabs of the battery cores of the other battery core group penetrate through the third support and are electrically connected through the other third connection sheet.

14. A battery, comprising a housing and a battery core unit according to any one of claims 1 to 13, the battery core unit being arranged in the housing.

15. A vehicle, comprising a battery core unit according to any one of claims 1 to 13 or a battery according to claim 14.
